## Europäisches Patentamt
## European Patent Office
## Office européen des brevets

(11) Veröffentlichungsnummer: **0 183 960**
**B1**

(12) **EUROPÄISCHE PATENTSCHRIFT**

(45) Veröffentlichungstag der Patentschrift:
26.07.89

(21) Anmeldenummer: 85113426.2

(22) Anmeldetag: 23.10.85

(51) Int. Cl.⁴: **C 08 L 61/20,** C 08 L 97/02, C 09 J 3/16

(54) Verwendung eines Härters für Leimharzflotten für die Flächenverleimung von Holzwerkstoffen sowie ein Verfahren zur Herstellung flächenverleimter Holzwerkstoffe.

(30) Priorität: 02.11.84 DE 3439928

(43) Veröffentlichungstag der Anmeldung:
11.06.86 Patentblatt 86/24

(45) Bekanntmachung des Hinweises auf die Patenterteilung:
26.07.89 Patentblatt 89/30

(84) Benannte Vertragsstaaten:
AT BE CH DE FR LI NL SE

(56) Entgegenhaltungen:
EP-A- 0 096 797
EP-A- 0 127 767
DE-A- 853 929
DE-A- 3 343 670
US-A- 2 613 167

WPIL, "file supplier", AN: 83-848404, Derwent Publications Ltd., London, GB; & JP-A-58 196 282 (HOHNEN OIL K.K.) 15-11-1983
WPIL, "file supplier", AN:81-944441D, Derwent Publications Ltd., London, GB; & SU-A-812 818 (CHEM. IND. RES. INST.) 15-03-1981
WPI, "file supplier", AN: 78-66022A, Derwent Publications Ltd., London, GB; & JP-A-53 090 343 (SUGIYAMA SANGYO KAG) 09-08-1978

(73) Patentinhaber: BASF Aktiengesellschaft,
Carl-Bosch-Strasse 38, D-6700 Ludwigshafen (DE)

(72) Erfinder: Pitteroff, Walter, Dr., In den Hahndornen 10, D-6719 Bobenheim (DE)
Erfinder: Lehnert, Heinz, Anselm-Feuerbach-Strasse 11f, D-6710 Frankenthal (DE)
Erfinder: Merkel, Dieter, Dr., Eolframstrasse 7, D-6700 Ludwigshafen (DE)
Erfinder: Matthias, Guenther, Dr., Meergartenweg 25a, D-6710 Frankenthal (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Verwendung eines Härters für Harnstoff-Formaldehyd- und Melamin-Harnstoff-Formaldehyd-Leimharzflotten, die bei der Flächenverleimung von Holzwerksoffen eingesetzt werden sowie ein neues Verfahren zur Herstellung flächenverleimter Holzwerkstoffe.

Bei der Flächenverleimung von Holzwerkstoffen handelt es sich vor allem um das Aufleimen von Furnieren auf Spanplatten, um daraus dann beispielsweise Panelle, Möbelteile oder Türen herzustellen. Weiterhin versteht man darunter auch das Aufleimen von Folien auf Spanplatten oder das Aufleimen von Furnieren auf Vollholz.

Es ist Stand der Technik, die Leimharzflotten für die Flächenverleimung von Holzwerkstoffen aus wässrigen Harnstoff-Formaldehyd- oder Melamin-Harnstoff-Formaldehyd-Harzlösungen und einem Härter herzustellen. Der Härter wird dabei üblicherweise in Form einer Lösung zugefügt. Er kann aber auch als Feststoff zugegeben werden und wird dann in der Leimharzlösung gelöst.

Als Härter verwendet man im allgemeinen Mischungen aus mehreren Komponenten. Als Hauptkomponente dient die eigentliche Härtersubstanz. Das sind z.B. Ammoniumsalze von Säuren, wie Ammoniumchlorid oder Ammoniumsulfat. Eine zweite Komponente dient als Reaktionsverzögerer für die Härtungsreaktion. Dazu verwendet man beispielsweise Harnstoff oder Hexamethylentetramin. Schliesslich setzt man als dritte Komponente ein sogenanntes Streckmittel, beispielsweise Mehl oder ähnliche organische Substanzen, zu.

Die Härterlösungen sind grösstenteils nicht stabil und scheiden im Laufe der Zeit allmählich das Streckmittel ab. Dies wiederum ist die Hauptursache für eine Anzahl von Nachteilen und Schwierigkeiten, die bei der Flächenverleimung von Holz auftreten.

So ergeben sich beim Durchlaufen der Leimauftragsmaschine schon erhebliche Schwierigkeiten. Da die Leimauftragsmaschine in ihrem Hauptteil aus zwei gegenläufigen Rollen besteht, zwischen denen sich ein verstellbarer Spalt befindet, durch den die Leimflotte in Form eines Vorhanges auf die zu beleimenden Flächen läuft, bildet die Leimflotte häufig einen Wulst im Rollenzwischenraum aus. Dadurch werden nun die Flächen unregelmässig und unterschiedlich dick beleimt. Um dies zu verhindern, ist ein erheblicher Arbeitsaufwand für Kontrollen und Nachstellungen der Rollen notwendig.

Ist nun der Leimauftrag stellenweise zu hoch, so schlägt dort der Leim durch das Furnier und bildet Flecken auf der Oberfläche. Aber auch schon bei normalem Auftrag mit üblichen Leimflotten findet ein Leimdurchschlag statt. Zu seiner Verhinderung kann man der Flotte Mehl zufügen, wodurch aber wiederum ein ungleichmässiger Auftrag gefördert wird.

Solche Leimflecken sind besonders unerwünscht bei teuren und daher in dünnen Blättern verwendeten Hölzern, wie Eiche, Teak oder Mahagoni, da hier die Flecken nicht mehr abgeschliffen werden können. Wenn ein Abschleifen möglich ist, muss aber mit erhöhtem Arbeisaufwand gerechnet werden. Zudem werden dadurch die Abmessungen der Holzwerkstoffe verändert.

Bedingt durch das Eindringen der Leimflotte in das Holz biegen sich die Furnierblätter durch und wölben sich auf. Dem kann durch Aufsprühen von Wasser auf das Furnier entgegengewirkt werden, jedoch verlängern sich aufgrund der resultierenden Leimverdünnung die Presszeiten.

Schliesslich sei noch erwähnt, dass die Gebrauchsdauer der Flotte bei einer Temperatur von 20 °C üblicherweise ca. 1,5 Stunden beträgt. Danach ist die Leimflotte zu dickflüssig geworden und muss neu zubereitet werden.

Aufgabe der vorliegenden Erfindung war es nun, einen Härter bereitzustellen, der die geschilderten Nachteile nicht aufweist und so die Schwierigkeiten, die bei der Flächenverleimung von Holzwerkstoffen auftreten, vermindert.

Es wurde nun gefunden, dass ein Härter auf Basis von Ammoniumsalzen starker Säuren und gegebenenfalls Harnstoff, der, bezogen auf seine trockenen Bestandteile, 10 bis 50 Gew.% eines Schichtsilicats, 0,3 bis 3 Gew.-% eines Stärkemehls oder 10 bis 50 Gew.-% eines Dextrins sowie 0,1 bis 2 Gew.-% Xanthan enthält, vorteilhaft für Harnstoff-Formaldehyd- oder Melamin-Harnstoff-Formaldehyd-Leimharzflotten verwendet werden kann, die bei der Flächenverleimung von Holzwerkstoffen zur Anwendung kommen.

Es wurde weiter gefunden, dass die Herstellung von flächenverleimten Holzwerkstoffen mittels Harnstoff-Formaldehyd- oder Melamin-Harnstoff-Formaldehyd-Harzen vorteilhaft gelingt, wenn man die Aushärtung der Leimharze mit dem Härter, dessen Verwendung oben beschrieben ist, durchführt.

Ein Härter, der anstelle des Xanthans ein Poly(meth)acrylamid enthält und der ebenfalls bei der Flächenverleimung von Holzwerkstoffen verwendet wird, ist Gegenstand der DE-A 33 43 670.3.

Weiterhin wird in der DE-A 33 16 352.9 (EP-A-127767) ein Verfahren zum Verleimen von Massivholz mittels Aminoplast- oder Phenoplast-Leimharzen beschrieben, wobei die Leimharze und/oder Härtermischungen ein Polysaccharid enthalten, das in wässriger Flüssigkeit Thixotropie verursacht.

Unter der Flächenverleimung von Holzwerkstoffen im Sinne der Erfindung ist, wie schon eingangs erwähnt, das Aufleimen von Folien und Furnieren auf Spanplatten und Vollholz zu verstehen.

Harnstoff-Formaldehyd- und Melamin-Harnstoff-Formaldehyd-Harze im Sinne der Erfindung sind die üblichen, zur Herstellung von Holzwerkstoffen verwendeten Bindemittel. Sie sind als wässrige Lösungen oder Pulver im Handel und enthalten Harnstoff- und/oder Melamin-Formaldehyd-Kondensate. Auch Mischkondensate und Kondensate, die weitere Bestandteile, z.B. Phenol oder andere Aldehyde enthalten können, sind üblich. Ihre Herstellung und Verwendung ist allgemein bekannt und für die Erfindung ohne Belang.

Die erforderlichen Ammoniumsalze starker Säuren leiten sich im allgemeinen von solchen ein- oder mehrbasigen Säuren ab, die einen $pK_A$-Wert aufweisen, der kleiner als 2,5, vorzugsweise kleiner als 1,5, ist. Beispielsweise sind zu nennen Salzsäure, Schwefelsäure, Bromwasserstoffsäure, Benzolsulfonsäure oder Phosphorsäure. Die Ammoniumsalze der Salzsäure und der Schwefelsäure sind bevorzugt.

Unter den genannten Schichtsilicaten sind Silicate zu verstehen, bei denen die $[SiO_4]$-Tetraeder zu Schichten verknüpft sind. Solche Verbindungen, die auch als Phyllosilicate bekannt sind, sind beispielsweise Chinaclay, Bentonit oder Montmorillonit.

Stärkemehl ist die aufbereitete Form des natürlich vorkommenden Polysaccharids Stärke. Als Stärkemehle können z.B. Kartoffelstärke, Reisstärke oder Roggenstärke verwendet werden.

Als Dextrine, die anstelle der Stärkemehle verwendet werden können, werden Abbauprodukte der Stärke bezeichnet, die bei unvollständiger Hydrolyse mit verdünnten Säuren, durch Hitzeeinwirkung oder durch enzymatischen Abbau entstehen. Bevorzugt werden solche Dextrine, die sich von Maisstärke oder Kartoffelstärke ableiten.

Xanthan ist ein Polysaccharid, das durch Biosynthese mittels Mikroorganismen erhalten werden kann. Sein Molekulargewicht liegt im allgemeinen bei ca. 2 000 000.

Die Hauptkette des Xanthanmoleküls besteht aus D-Glucoseeinheiten, die in Form von β-D-Glucopyranoseringen (1,4)-glycosidisch miteinander verknüpft sind. Dabei trägt jeder zweite Glucosebaustein der Kette eine Seitenkette, bestehend aus zwei β-D-Mannopyranoseeinheiten und einer β-D-Glucoronsäureeinheit.

Xanthan verursacht in wässrigem Medium Thixotropie. Unter Thixotropie versteht man den Effekt, dass durch Einwirkung von Scherkräften die vorher sehr hohe Viskosität fliessender Stoffe stark erniedrigt wird, wobei sich nach Beendigung der Scherkrafteinwirkung die Viskosität zeitabhängig wieder erhöht. In der vorliegenden Erfindung soll darunter aber auch der Effekt verstanden werden, dass sich die Viskosität nach Beendigung der Scherkrafteinwirkung sofort wieder erhöht. Dieser Effekt wird im allgemeinen durch den Begriff «Strukturviskosität» charakterisiert.

Es ist bekannt, verschiedene Polysaccharide als Hilfsmittel Aminoplast- bzw. Phenoplastleimharzen zuzusetzen.

So wird in der DE-C-853 929 und in der SE-A-370 546 der Zusatz von Alginaten beschrieben. Diese Produkte werden aber, ebenso wie die in der US-A-2 613 167 genannten Celluloseether, als Verdickungsmittel bzw. als Schutzkolloid eingesetzt und zeigen keine thixotrope Wirkung.

Nach der Lehre der EP-A-96 797 sollen bei der Herstellung von Spanholzwerkstoffen zur Verringerung der Formaldehydemission die Späne vor oder nach oder gleichzeitig mit dem Bindemittelauftrag mit einer wässrigen Flüssigkeit behandelt werden, die Mittel zur Bindung von Formaldehyd sowie eine Thixotropie verursachendes Polysaccharid enthält. Als vorteilhaftes Polysaccharid wurde D-Galacto-D-mannan genannt.

Aus diesem Vorschlag war aber keine Anregung zu entnehmen, dass die Verwendung von Polysacchariden, die in wässrigem Medium Thixotropie verursachen als Zusatz zu den genannten speziellen Härtern schliesslich Vorteile bei der Flächenverleimung von Holzwerkstoffen mit sich bringen würden.

Ausserdem hat sich gezeigt, dass gerade die Verwendung der aus dem Stand der Technik bekannten D-Galacto-D-mannane im vorliegenden Fall ungünstige Ergebnisse liefert. Denn beim Einsatz von entsprechenden Leimflotten, die einen Härter enthalten, der D-Galacto-D-mannane als Thixotropiermittel aufweist, neigen diese Leimflotten verstärkt zum Fadenziehen. Dies bedeutet, dass beispielsweise beim Abstellen der Leimzufuhr, die immer dann erfolgt, wenn z.B. eine Spanplatte unter der Leimauftragsmaschine durchgelaufen ist, dann weiterhin noch Leimflotte abtropft. Dadurch werden die Maschinen für die nachfolgenden Arbeitsgänge verschmutzt; die notwendigen Reinigungsarbeiten belasten das Abwasser. Zudem sei auf die auftretenden Verluste an Leimflotte hingewiesen.

Es war daher besonders überraschend und nicht vorhersehbar, dass gerade beim Zusatz des Polysaccharids Xanthan zu den erfindungsgemäss anzuwendenden Härtern diese Probleme vermieden werden können.

Der Anteil der einzelnen Härterkomponenten ist über einen weiten Bereich hinweg variabel. So sind beispielsweise folgende Konzentrationsbereiche (jeweils bezogen auf die trockenen Bestandteile des Härters) möglich;

| Ammoniumchlorid- oder -sulfat | 5 | bis 30 Gew.-% |
|---|---|---|
| Harnstoff | 0 | bis 60 Gew.-% |
| Chinaclay | 10 | bis 50 Gew.-% |
| Kartoffelstärke | 0,3 | bis 3 Gew.-% |
| (oder Mais-Dextrin | 10 | bis 50 Gew.-%) |
| Xanthan | 0,1 | bis 2 Gew.-% |

Die erfindungsgemäss anzuwendenden Härterpulver können in Form von wässrigen Lösungen bzw. Suspensionen eingesetzt werden. Vorteilhaft wendet man Mischungen an, die im Bereich zwischen 70 Teilen Pulver und 30 Teilen Wasser und 40 Teilen Pulver und 60 Teilen Wasser liegen.

Eine für das erfindungsgemässe Verfahren typische Leimflotte enthält neben dem Harnstoff-Formaldehyd- oder Melamin-Formaldehyd-Harz 5 bis 50 Gew.-%, bezogen auf den Festharzanteil, des Härters, berechnet als Härterpulver.

Man bereitet sie also so zu, dass sie 5 bis 50 Teile Härtepulver auf 100 Teile Festharz enthält. Nach dem Vermischen ist sie direkt gebrauchsfertig und kann in die Leimauftragsmaschine gegeben werden.

Beim erfindungsgemässen Verfahren ergeben sich wesentlich kürzere Presszeiten als sonst üblich. Zudem erhält man eine einwandfreie Lage des Furniers, d.h. es biegt sich nicht durch und man beobachtet kein Durchschlagen des Leims. Schliesslich weist die Leimflotte eine wesentlich längere Gebrauchsdauer auf.

Die folgenden Beispiele sollen die Erfindung näher erläutern. Die in den Beispielen genannten Teile sind Gewichtsteile.

Beispiel 1

Ein Härterpulver wurde aus folgenden pulvrigen Bestandteilen zusammengemischt:

12,5 Teile Ammoniumchlorid
37,5 Teile Harnstoff
21,0 Teile Chinaclay
 0,8 Teile Kartoffelstärke
 0,3 Teile Xanthan

Diese Mischung wurde mit 50 Teilen Wasser zu einer Suspension verrührt und 2 Stunden bei einer Temperatur von 20 °C stehen gelassen.

Die so erhaltene Suspension war stabil und zeigte keine Absatzerscheinungen.

18 Teile dieser Härter-Suspension wurden mit 15 Teilen einer Leimlösung gemischt. Als Leimlösung diente ein Harnstoff-Formaldehyd-Kondensat mit einem Molverhältnis Harnstoff: Formaldehyd = 1 : 1,85, einer Viskosität von 900 mPa.s, gemessen bei 20 °C und einem Gehalt von freiem Formaldehyd von 1,6 Gew.-%. Ihr Feststoffgehalt betrug 65 Gew.-%. Die solchermassen hergestellte Leimflotte besass eine Gelierzeit von 50 Minuten, gemessen bei 40 °C.

Mit dieser Flotte wurde eine Papierfolie auf eine Spanplatte geleimt. Der Leimauftrag auf die Spanplatte betrug 60 g/m² (konstant über die gesamte Plattenfläche), aufgetragen mit einer Leimauftragsmaschine. (Diese bestand aus 2 Walzen, zwischen denen der Leim in Form einer breiten Fläche auslief). Die Folie wurde bei einer Temperatur von 110 °C in einer Zeit von 35 Sekunden aufgeleimt. Ein Durchschlagen des Leims durch die Folie war nicht zu beobachten. Die Gebrauchsdauer der Leimflotte in der laufenden Maschine betrug 4 Stunden bei 20 °C.

Beispiel 2

15 Teile einer Härter-Suspension gemäss Beispiel 1 wurden mit 100 Teilen einer Leimharz-Lösung zu einer Leimflotte gemischt. Die Leimharz-Lösung bestand aus einem Harnstoff-Formaldehyd-Kondensationsprodukt mit einem Feststoffgehalt von 70 Gew.-%. Das Molverhältnis Harnstoff: Formaldehyd betrug 1 : 2,10, die Viskosität 7200 mPa.s, gemessen bei 20 °C und der Gehalt an freiem Formaldehyd 3,1 Gew.-%. Die Gelierzeit dieser Leimflotte lag bei 40 Minuten, gemessen bei 40 °C.

Ein Eichenfurnier mit einer Blattstärke von 0,6 mm wurde bei einer Temperatur von 110 °C im Zeitraum von 40 Sekunden auf eine Spanplatte aufgeleimt. Man verwendete dazu die in Beispiel 1 beschriebene Leimauftragsmaschine. Der Leimauftrag auf die Spanplatte betrug 60 g/m². Trotz dieser geringen Leimmenge pro Flächeneinheit erzielte man eine sehr gleichmässige Verteilung. Die Gebrauchsfrist der Leimflotte auf der Maschine wurde mit 5 Stunden bei 20 °C gemessen.

Beispiel 3
Vergleichsbeispiel

Eine Härter-Suspension gemäss Beispiel 1, jedoch ohne Xanthan, wurde analog Beispiel 2 mit einer Leimharz-Lösung zu einer Leimflotte angesetzt. Die Gelierzeit der Leimflotte betrug 40 Minuten, gemessen bei 40 °C.

Mit dieser Leimflotte wurde ein Eichenfurnier mit einer Blattstärke von 0,6 mm auf eine Spanplatte aufgeleimt. Die Beleimung erfolgte analog den Beispielen 1 und 2 bei einer Temperatur von 110 °C im Zeitraum von 40 Sekunden. Der durchschnittliche Leimauftrag auf die Spanplatte lag bei 80 g/m² und war trotz aller Vorsichtsmassnahmen äusserst ungleichmässig, mit Mengenunterschieden von ± 20 g/m². Nach dem Aufkleben wurde ein Durchschlagen des Leimes bemerkt, erkennbar an weissen Flecken und spiegelnden Stellen im Furnier. Die spiegelnden Stellen waren nicht lackierbar. Ferner wurde festgestellt, dass sich die Leimflotte absetzt. Die Füllstoffe sedimentierten bereits in der kurzen Zeit von 10 Minuten, wodurch intensives Rühren während der gesamten Leimungsvorgänge notwendig wurde. Die Gebrauchsfrist der Leimflotte auf der Auftragsmaschine betrug ca. 1 Stunde.

Beispiel 4

Dieses Beispiel wurde analog Beispiel 1 durchgeführt. Anstelle von 37,5 Teilen Harnstoff wurden jedoch jetzt 10 Teile Harnstoff verwendet. Weiterhin wurden anstelle von 0,8 Teilen Kartoffelstärke jetzt 40 Teile Mais-Dextrin eingesetzt.

Man erhielt die gleichen vorteilhaften Ergebnisse wie in Beispiel 1.

**Patentansprüche**

1. Verwendung eines Härters auf Basis von Ammoniumsalzen starker Säuren und gegebenenfalls Harnstoff, der bezogen auf seine trockenen Bestandteile, 10 bis 50 Gew.-% eines Schichtsilicats, 0,3 bis 3 Gew.-% eines Stärkemehls oder 10 bis 50 Gew.-% eines Dextrins sowie 0,1 bis 2 Gew.-% Xanthan enthält, für Harnstoff-Formaldehyd- oder Melamin-Harnstoff-Formaldehyd-Leimharzflotten, die bei der Flächenverleimung von Holzwerkstoffen zur Anwendung kommen.

2. Verfahren zur Herstellung von flächenverleimten Holzwerkstoffen mittels Harnstoff-Formaldehyd- oder Melamin-Harnstoff-Formaldehyd-Leimharzen, dadurch gekennzeichnet, dass man die Aushärtung der Leimharze mit einem Härter auf Basis von Ammoniumsalzen starker Säuren und gegebenenfalls Harnstoff durchführt, wobei der Härter, bezogen auf seine trockenen Bestandteile, 10 bis 50 Gew.-% eines Schichtsilicats, 0,3 bis 3 Gew.-% eines Stärkemehls oder 10 bis 50 Gew.-% eines Dextrins sowie 0,1 bis 2 Gew.-% Xanthan enthält.

**Revendications**

1. Utilisation d'un durcisseur à base de sels d'ammonium d'acides forts et éventuellement d'urée, qui contient, par rapport à ses constituants séchés, de 10 à 50% en poids d'un phyllosilicate, de 0,3 à 3 % en poids d'une farine d'amidon ou 10 à 50 % en poids d'une dextrine ainsi que 0,1 à 2 % en poids de xanthane, pour des bains de collage à base de résines urée-formaldéhyde ou mélamine-urée-formaldéhyde qui sont utilisés pour l'encollage des surfaces de panneaux de dérivés du bois.

2. Procédé de préparation de panneaux de dérivés du bois à surfaces encollées à l'aide de résines de collage urée-formaldéhyde ou mélamine-urée-formaldéhyde, caractérisé en ce qu'on effectue le durcissement de la résine de collage avec un durcisseur à base de sels d'ammonium d'acides forts et éventuellement d'urée, le durcisseur contenant, par rapport à ses constituants séchés, de 10 à 50 % en poids d'un phyllosilicate, de 0,3 à 3 % en poids d'une farine d'amidon ou 10 à 50 % en poids d'une dextrine ainsi que 0,1 à 2 % en poids de xanthane.

**Claims**

1. Use of a curing agent based on an ammonium salt of a strong acid and, if required, urea, which curing agent contains form 10 to 50% by weight of a sheet silicate, from 0.3 to 3% by weight of a starch powder or from 10 to 50% by weight of a dextrin and from 0.1 to 2% by weight of xanthan, the percentages being based on its dry components, for urea/formaldehyde or melamine/urea/formaldehyde resin glue liquors which are used for gluing the surfaces of woodworking materials.

2. A process for the production of a woodworking material having glued surfaces by means of a urea/formaldehyde or melamine/urea/formaldehyde resin glue, wherein the resin glue is cured with a curing agent based on an ammonium salt of a strong acid and, if required, urea, the curing agent containing from 10 to 50% by weight of a sheet silicate, from 0.3 to 3% by weight of a starch powder or from 10 to 50% by weight of a dextrin and from 0.1 to 2% by weight of xanthan, and the percentages being based on its dry components.